# EUROPEAN PATENT APPLICATION

(11) **EP 4 195 326 A1**
(43) Date of publication of application: **14.06.2023**
(21) Application number: 21306763.0
(22) Date of filing: 13.12.2021
(51) Int. Cl.: H01M 4/62, H01M 4/525, H01M 10/052, H01M 10/0525, H01M 12/08, H01M 4/86, H01M 4/96, H01M 10/0568, H01M 10/0569

(54) **BINDERS FOR CATHODES OF LITHIUM SECONDARY BATTERY CELLS**

(71) Applicant: TOYOTA JIDOSHA KABUSHIKI KAISHA, Toyota-shi, Aichi-ken, 471-8571 (JP); Universidad del País Vasco/Euskal Herriko Unibertsitatea, 48940 Leoia, Bikaia (ES)
(72) Inventor: COTTE, Stéphane, 1140 BRUSSELS (BE); GUEGUEN, Aurélie, 1140 BRUSSELS (BE); CASTRO, Laurent, 1140 BRUSSELS (BE); VAUTHIER, Soline, 48940 LEIOA (VIZCAYA) (ES); ALVAREZ, Marta, 48940 LEIOA (VIZCAYA) (ES); CASADO, Nerea, 48940 LEIOA (VIZCAYA) (ES); MECERREYES, David, 48940 LEIOA (VIZCAYA) (ES)
(74) Representative: Cabinet Beau de Loménie

(57) **Abstract**

In a first aspect, the present invention relates to a composition comprising:
(A) a mixed oxide of lithium, nickel, manganese and cobalt;
(B) a fluorinated anion salt of a polycationic polymer.

The first aspect of the present invention further relates to a lithium-ion battery, comprising a cathode including a positive electrode active material comprising the composition containing components (A) and (B).

In a second aspect, the present invention relates to a lithium-air battery comprising a cathode using oxygen as a positive-electrode active material, wherein the cathode contains a fluorinated anion salt of a polycationic polymer.

The fluorinated anion salt of the polycationic polymer contains repeating units represented by one of the following formulae (1) or (2): 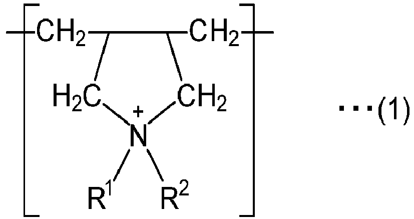 wherein, in the formula (1), N⁺ is a nitrogen atom constituting a quaternary ammonium cation, R¹ and R² being each independently a substituent containing a carbon atom bonded to the nitrogen atom, 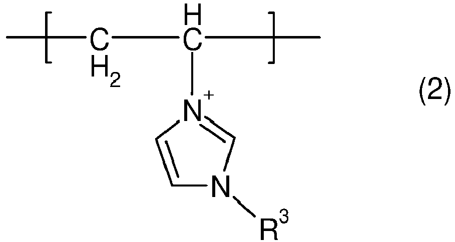 wherein, in the formula (2), R³ is a hydrogen atom or an alkyl group having 1 to 4 carbon atoms.

## Description

### Field of the Invention

The present invention relates to compositions of particular interest as cathode materials for secondary battery cells, especially lithium-ion and lithium-air (lithium-O₂) secondary battery cells. Secondary battery cells with different kinds of electrolyte are concerned including liquid electrolytes and gel polymer electrolytes.

### Background Art

Lithium-ion secondary battery cells are widely used in many technologies. On the positive side of the battery, acting as the cathode during discharge, cathode materials are known which comprise a lithium nickel manganese cobalt oxide (NMC) as described in Non-Patent Literature Reference (4). NMC batteries are useful in electric vehicles and energy storage systems (ESS).

Rechargeable lithium-air batteries have attracted attention as a rechargeable lithium battery for electric vehicles and hybrid vehicles, which is required to have high energy density. Rechargeable lithium-air batteries use oxygen in the air as a cathode active material. In metal-air batteries, the cathode active material, oxygen, is not contained within the battery. Instead, this material is provided by the surrounding atmosphere. Naturally, such a system allows in principle a very high specific energy (energy provided by the battery per unit weight, typically given in Wh/kg in this technical field). Therefore, compared to conventional lithium rechargeable batteries containing a transition metal oxide (e.g., lithium cobaltate) as a cathode active material, rechargeable lithium-air batteries are able to have larger capacity.

Conventional binders for cathode electrodes in Li-ion and Li-air batteries are PVDF and Nafion^{®} respectively. These polymers do not have any lithium conductivity and thus increase the overall resistance of the cell.

Non-Patent Literature Reference (1) discloses the manufacturing and material composition of a solid electrolyte for a Li-ion battery. A polyionic liquid such as PDADMA-TFSI is mentioned as a possibility to be used at the interface between cathode and solid electrolyte, PDADMA being poly(diallyldimethylammonium) and TFSI being TFSI being bis(trifluoromethanesulfonyl)imide. Non-Patent Literature Reference (2) discloses the use of PDADMA-TFSI in the electrolyte formulation.

Non-Patent Literature Reference (3) discloses the manufacturing and material composition of a binder for a Li-S battery. Here, PDADMA-Cl is used to form a crosslinked binder with ammonium functions. Non-Patent Literature Reference (4) discloses the use of PDADMA-TFSI as a binder for Na-air batteries. The authors compare performance with PVDF and PTFE. A preferred electrolyte has 16.6 mol % NaTFSI in [C4mpyr][TFSI] ionic liquid. Only 1 cycle discharge/charge is studied, not cycling on the cells.

### Non-Patent Literature References

(1) Pont, A. L.; Marcilla, R.; De Meatza, I.; Grande, H.; Mecerreyes, D. Pyrrolidinium-Based Polymeric Ionic Liquids as Mechanically and Electrochemically Stable Polymer Electrolytes. J. Power Sources 2009, 188 (2), 558-563. https://doi.org/10.1016/j.jpowsour.2008.11.115
(2) Tomé, L. C.; Isik, M.; Freire, C. S. R.; Mecerreyes, D.; Marrucho, I. M. Novel Pyrrolidinium-Based Polymeric Ionic Liquids with Cyano Counter-Anions: HIGH Performance Membrane Materials for Post-Combustion CO2 Separation. J. Memb. Sci. 2015, 483, 155-165
(3) Liao, J.; Ye, Z. Quaternary Ammonium Cationic Polymer as a Superior Bifunctional Binder for Lithium-sulfur Batteries and Effects of Counter Anion. Electrochim. Acta 2018, 259, 626-636. https://doi.org/10.1016/j.electacta.2017.10.194.
(4) The An Ha et al., Functional Binders Based on Polymeric Ionic Liquids for Sodium Oxygen Batteries Using Ionic Liquid Electrolytes https://doi.orq/10.1021/acsaem.0c02352
(5) Wladislaw Waag, Stefan Kabitz, D. U. S. Experimental Investigation of the Lithium-Ion Battery Impedance Characteristic at Various Conditions and Aging States and Its Influence on the Application. Appl. Energy

### Patent Literature References

(1) EP 3 439 072
(2) JP 2019 021538
(3) WO 2020 237364

### Summary of the Invention

In the context of binders for NMC cathodes in Li-ion batteries, traditional binders such as PVDF do not necessarily provide high performance in terms of capacity or resistance.

In the context of binders for air electrodes in Li-O₂ batteries, Nafion^{®} membranes do not necessarily provide optimal rate and/or capacity.

The present invention seeks to provide binders enabling higher performance when applied in the cathodes of Li-ion batteries and Li-O₂ batteries.

Thus, in a first aspect, the present invention relates to a composition comprising:
(A) a mixed oxide of lithium, nickel, manganese and cobalt;
(B) a fluorinated anion salt of a polycationic polymer containing repeating units represented by one of the following formulae (1) or (2): 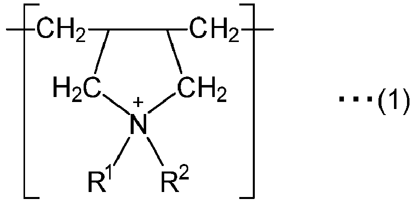 wherein, in the formula (1), N⁺ is a nitrogen atom constituting a quaternary ammonium cation, R¹ and R² being each independently a substituent containing a carbon atom bonded to the nitrogen atom, 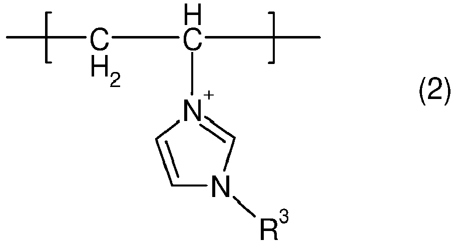 wherein, in the formula (2), R³ is a hydrogen atom or an alkyl group having 1 to 4 carbon atoms.

The first aspect of the present invention further relates to a lithium-ion battery, comprising:
- a cathode including a positive electrode active material comprising the composition containing components (A) and (B) as set out above;
- an anode including a negative electrode active material; and
- an electrolyte medium arranged between the anode and the cathode.

In a second aspect, the present invention relates to a lithium-air battery comprising:
- an anode containing a negative-electrode active material;
- a cathode using oxygen as a positive-electrode active material; and
- an electrolyte medium arranged between the anode and the cathode,
wherein the cathode contains a fluorinated anion salt of a polycationic polymer containing repeating units represented by one of the following formulae (1) or (2) as set out above in relation to the first aspect of the present invention.

### Brief description of the Figures

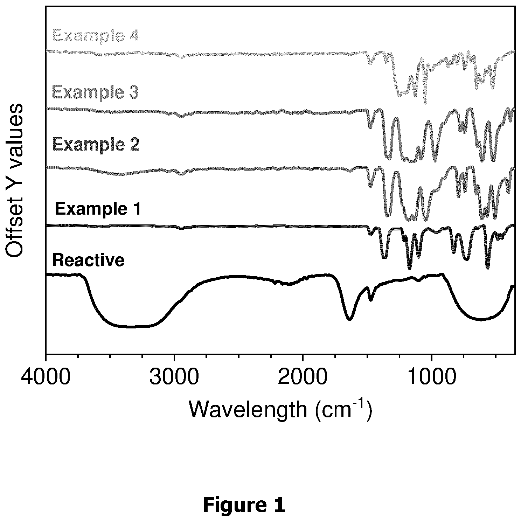

Figure 1 shows FT-IR spectra of the obtained polymers compared with PDADMA-CI.

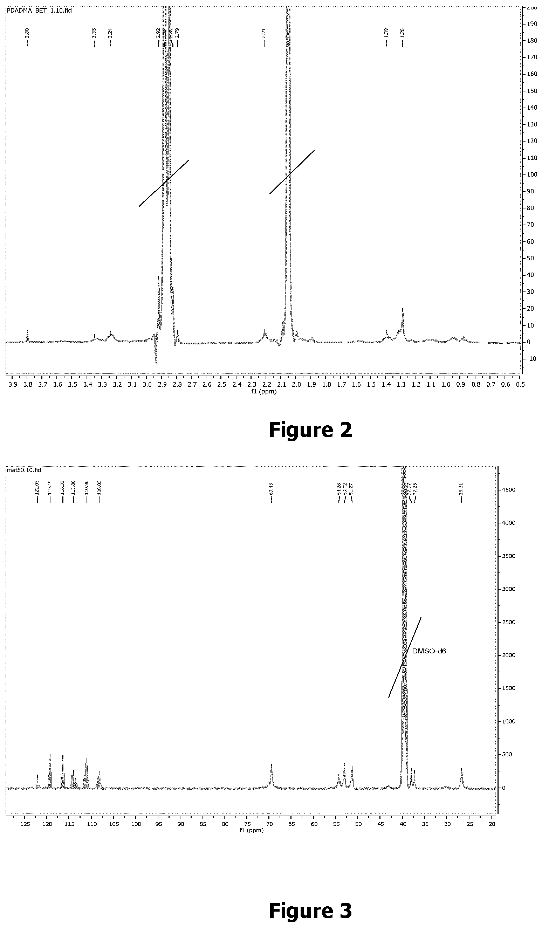

Figure 2 shows ¹H NMR spectra of PDADMA-BETI (BETI is bis(perfluoroethylsulfonyl)i mide).
Figure 3 shows ¹³C NMR spectra of PDADMA-BETI.

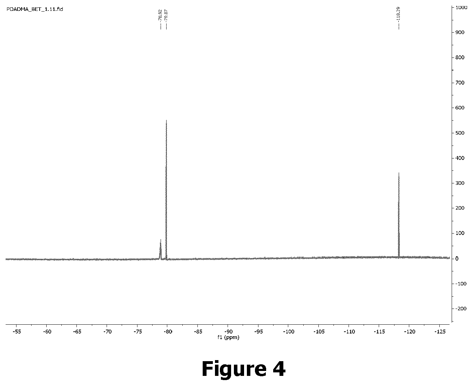

Figure 4 shows ¹⁹F NMR spectra of PDADMA-BETI.
Figure 5 shows a galvanostatic discharge-charge test.
Figure 6 shows resistance measurements.
Figure 7 shows long galvanostatic discharge-charge cycling tests, 3C at 25 °C and 3C at 50 °C.
Figure 8 shows a galvanostatic discharge-charge test on Li-O₂ cells.
Figure 9 shows a galvanostatic discharge-charge with limited capacity on Li-O₂ cells.
Figure 10 shows a rate test on Li-O₂ cells.

### Detailed description of the Invention

### < Li-ion batteries>

In a first aspect, the present invention relates to binders for NMC cathodes in Li-ion batteries.

The abbreviation "NMC" is commonly used in this technical field to refer to mixed oxides of lithium, nickel, manganese and cobalt used as cathodes in lithium-ion batteries. In the present invention, the present inventors have found that advantageous battery performance can be achieved in lithium-ion batteries with positive electrode active materials containing a mixture of NMC-type mixed oxides on the one hand and, on the other hand, polyionic liquids containing certain types of polycation in combination with fluorinated anions, such as in particular FSI, TFSI, BETI and -C₄F₉-SO₃.

The lithium-ion battery of the present invention includes a cathode containing the positive electrode active material of the present invention, an anode, and an electrolytic solution. A separator may also be disposed between the anode and the cathode.

A current collector may be used which is not particularly limited and known materials and designs can be used. The current collector may for example be a two-dimensional conducting support such as a solid or perforated sheet, based on carbon or metal, for example in nickel, steel, stainless steel or aluminum.

### (Cathode for Li-ion battery)

The positive electrode active material of the present invention, present in the cathode contains (A) a mixed oxide of lithium, nickel, manganese and cobalt, and (B) a fluorinated anion salt of a polycationic polymer containing repeating units represented by formulae (1) or (2) as set out above.

A number of (B) materials, fluorinated anion salt of a polycationic polymer containing repeating units represented of formulae (1) or (2) as set out above, are commercially available or obtainable in well-established syntheses, as detailed for example in the review by A. S. Shaplov et al, "Recent Advances in Innovative Polymer Electroytes based on Poly(ionic liquid)s", Electrochimica Acta, 2015 (http://dx.doi.orci/10.1016/j.electacta.2015.03.038).

In preferred compositions for use in the cathode of a Li-ion battery of the present invention, each of R¹ and R² in formula (1) is an alkyl group, preferably a methyl group, an ethyl group, a propyl group or a butyl group. In particularly preferred compositions, R¹ and R² in formula (1) are both a methyl group, or R¹ in formula (1) is a methyl group and R² is a butyl group.

In preferred compositions for use in the cathode of a Li-ion battery of the present invention, a fluorinated anion salt of a polycationic polymer is present containing repeating units represented by formula (2), wherein R³ in formula (2) is an ethyl group.

Preferred weight average molecular weights Mw of polycationic polymers containing repeating units represented by formula (1) or (2) are between 50,000 and 1,000,000. For polycationic polymers containing repeating units represented by formula (1), a more preferred Mw range is above 350,000, most preferably between 400,000 and 500,000.

In preferred compositions, the fluorinated anion salt of the polycationic polymer comprises, as fluorinated counterion to the polycationic polymer, an imide anion of formula (3):

(F-(CF₂)ₙ-(SO₂)-)₂N⁻ (3)

wherein n = 0, 1 or 2.

As well as symmetrical imide anions where the fluoroalkyl chain length is identical on both sides of the nitrogen atom, asymmetrical imide anions may be applicable, such as the n0,1 and n1,4 anions shown below:

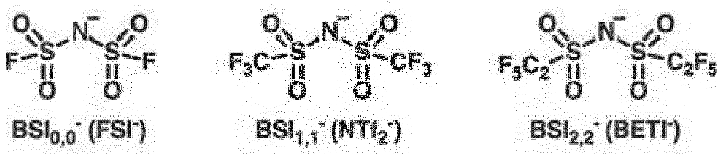

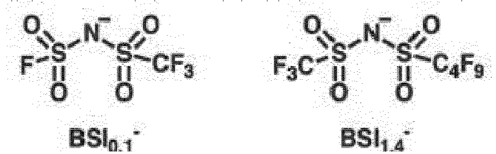

In further preferred compositions, the fluorinated anion salt of the polycationic polymer may comprise, as fluorinated counterion to the polycationic polymer, a perfluoroalkyl sulfonate of formula (4):

F-(CF₂)ₙ-(SO₃)⁻ (4)

wherein n is an integer of 1 to 6. In a particularly preferred embodiment, in the perfluoroalkyl sulfonate of formula (4), n is 4.

Particularly preferred (B) materials in the present invention are salts of the poly-cationic substance referred to as PDADMA (corresponding to formula (1) wherein R¹ and R² are both a methyl group), this being poly(diallyldimethylammonium), with one of the following perfluorinated anions:
FSI = bis(fluorosulfonyl)imide;
TFSI = bis((trifluoromethyl)sulfonyl)imide;
BETI = bis((perfluoroethyl)sulfonyl)imide; and
CFSO = nanofluoro-1-butanesulfonate.

When combining fluorinated anions and polycationic polymers in the (B) components of the present invention, the polycationic polymers will often be prepared initially, and be available commercially, with halogen counteranions such as chloride. Similarly, the fluorinated anions are often prepared initially, and are available commercially, as salts of alkali metal cations such as lithium, sodium or potassium salts.

The amount of (B) the fluorinated anion salt of a polycationic polymer is preferably 2 wt % to 10 wt %, when a total weight of the positive electrode material is considered 100 wt %.

Concerning (A), the mixed oxide of lithium, nickel, manganese and cobalt, this preferably has a general formula (5):

LiNiₓMn_{y}Co_{z}O_{2±a} (5)

wherein x + y + z = 1.0, and α is at most 0.05.

A preferred mixed oxide in the present invention has x = 0.5, y = 0.3 and z = 0.2. This is referred to the art both as "NMC523" and "NMC532". Other preferred oxides as (A) components include those commonly referred to in the art as "NMC 811" (x = 0.8, y = 0.1 and z = 0.1), "NMC 622" (x = 0.6, y = 0.2 and z = 0.2), and "NMC111" (x = 0.33, y = 0.33 and z = 0.33).

The amount of (A) the mixed oxide of lithium, nickel, manganese and cobalt, is preferably 90 wt % to 95 wt %, when a total weight of the positive electrode material is considered 100 wt %.

Carbon such as acetylene black may also be appropriately used as additive for improving electronic conductivity of the electrode. The ratio can be similar to that of the binder (B) viz. 2 wt% to 10 wt%, when a total weight of the positive electrode material is considered 100 wt %.

### (Anode)

The structure of the negative electrode (or anode) is not particularly limited and known anode active materials can be used, as long as the material can function as the negative electrode active material of the lithium-ion battery. For example, the active material of the anode can include carbon-based negative electrode active materials, such as graphite and coke, alloy-based negative electrode active materials such as Si and/or Sn, a lithium metal, a lithium titanate oxide (LTO), or a blend thereof.

### (Electrolytic Solution)

The electrolytic solution can be a known non-aqueous electrolytic solution, which includes a lithium salt dissolved in a solvent.

The lithium salt is not particularly limited and known lithium salts for use in non-aqueous lithium-ion batteries can be used. In preferred embodiments, the electrolyte salt may include one or more of lithium bis(fluorosulfonyl)imide ("LiFSI"), lithium bis(trifluoromethanesulfonyl)imide ("LiTFSI"), LiBF₄, lithium bis(oxalato)borate ("LiBOB"), LiClO₄, LiAsF₆, LiPF₆, UCF₃SO₃, lithium 4,5-dicyano-2-(trifluoromethyl)imidazole ("LiTDI"), LiPO₂F₂. The concentration of the salt is preferably in the range of 0.1 to 5.0 M. In preferred embodiments, the lithium salt concentration in the electrolytic solution is more than 1.0 M, more than 1.5 M, and most preferably more than 2.0 M. In preferred embodiments, the salt concentration is less than 4.0 M, more than 3.2M, and most preferably less than 2.0 M.

Furthermore, binders may be used with an ionic liquid-based electrolyte or a gel polymer electrolyte.

The solvent is not particularly limited and known solvents for non-aqueous lithium-ion batteries can be used. The solvent can be a single solvent or a mixture of solvents. The solvent can be selected from usual organic solvents, notably saturated cyclic carbonates, unsaturated cyclic carbonates, non-cyclic (or linear) carbonates, alkyl esters such as formates, acetates, propionates or butyrates, ethers, lactones such as gamma-butyrolactone, tetrahydrothiophene bioxide, nitrile solvents and mixtures thereof. Among such saturated cyclic carbonates, specific mention may be made, for example, of ethylene carbonate (EC), propylene carbonate (PC), butylene carbonate (BC), and mixtures thereof. Among unsaturated cyclic carbonates, specific mention may be made, for example, of vinylene carbonate (VC), its derivatives and mixtures thereof. Among non-cyclic carbonates, specific mention may be made, for example, of dimethyl carbonate (DMC), diethyl carbonate (DEC), ethyl methyl carbonate (EMC), dipropyl carbonate (DPC) and mixtures thereof. Among the alkyl esters, specific mention may be made, for example, of methyl acetate, ethyl acetate, methyl propionate, ethyl propionate, butyl propionate, methyl butyrate, ethyl butyrate, propyl butyrate and mixtures thereof. Among the ethers, mention may for example be made of dimethyl ether (DME) or diethyl ether (DEE), and mixtures thereof. Known fluorinated solvents can also be used, including, for example, fluorinated benzenes (such as hexafluorobenzene, pentafluorobenzene, 1,2,3,4-tetrafluorobenzene, etc.), fluorine substituted linear carbonates, etc. Gel polymer electrolytes are also applicable electrolyte materials in the present invention.

### (Separator)

The separator is not particularly limited and known separators for use in non-aqueous lithium-ion batteries can be used. The separator allows Li⁺ to pass therethrough and prevents electrical contact between the anode and cathode. In one embodiment, the separator is a microporous membrane made of a polyolefin-based material, such as, for example, a microporous membrane made of polyethylene (PE), polypropylene (PP) or the like.

Another preferred separator material is glass fibre, such as that commercially available as Whatman^{®}, GF 6 grade, Schleicher&Schüll.

### <Li-air batteries>

### (Anode)

In a lithium-air battery of the second aspect of the present invention, the negative electrode (which may also be referred to as "anode" hereinafter) comprises at least an anode active material (which may also be referred to as "negative electrode active material" hereinafter). As the anode active material, general anode active materials for lithium batteries can be used and the anode active material is not particularly limited. In general, the anode active material is able to store/release a lithium ion (Li⁺).

Specific anode active materials for rechargeable lithium-air batteries are, for example, a lithium metal, lithium protected anodes, lithium alloys such as a lithium-aluminum alloy, a lithium-tin alloy, a lithium-lead alloy and a lithium-silicon alloy, metal oxides such as a tin oxide, a silicon oxide, a lithium-titanium oxide, a niobium oxide and a tungsten oxide, metal sulfides such as a tin sulfide and titanium sulfide, metal nitrides such as a lithium-cobalt nitride, a lithium-iron nitride and a lithium manganese nitride, and carbonaceous materials such as, graphite. Of these, lithium metal is preferred.

By "lithium-protected anode", reference is made here for example (but is not limited to) to a "Lithium Protected Electrode" (LPE). Usually the Li is covered by a solid electrolyte (for example LISICON with formulae LiM₂(PO₄)₃). Between the LiSiCON and the Li metal, there is usually an interlayer (for example consisting of Cu₃N/Li₃N). In LPE systems, Li metal can be attached directly to one side of LiSiCON material, or alternatively a small amount of solvent containing a Li salt electrolyte may be added between the LiSiCON material and the Li metal to ensure Li ionic conductivity. Such materials have been described in, for example, US 7 282 295, US 7 491 458.

When a metal, alloy or the like in the form of foil or metal is used as the anode active material, it can be used as the anode itself.

The anode is required to contain at least an anode active material; however, as needed, it can contain a binder for fixing the anode active material. The type and usage of the binder are the same as those of the air cathode described hereinafter, so that they will not be described here.

In general, an anode collector is connected to the anode, which collects current from the anode. The material for the anode collector and the shape of the same are not particularly limited. Examples of the material for the anode collector include stainless steel, copper and nickel. Examples of the form of the anode collector include a foil form, a plate form and a mesh (grid) form.

### (Cathode for Li-air battery)

In the lithium-air battery of the present invention, the positive electrode uses oxygen as a positive-electrode active material. Oxygen serving as the positive-electrode active material may be contained in air or oxygen gas.

The positive electrode active material of the present invention, present in the cathode contains (B) a fluorinated anion salt of a polycationic polymer containing repeating units represented by formulae (1) or (2) as set out above for the lithium-ion first aspect of the present invention.

Particularly preferred (B) materials are salts of the poly-cationic substance referred to as PDADMA, this being poly(diallyldimethylammonium), with one of the following perfluorinated anions:
FSI = bis(fluorosulfonyl)imide;
TFSI = bis((trifluoromethyl)sulfonyl)imide;
BETI = bis((perfluoroethyl)sulfonyl)imide; and
CFSO = nanofluoro-1-butanesulfonate.

The amount of (B) the fluorinated anion salt of a polycationic polymer is preferably 2 wt % to 4 wt %, with respect to a total weight of the positive electrode material considered as 100 wt% for the full positive electrode constituted by the gas diffusion layer (GDL) and slurry, where the slurry is carbon and binder, most preferably in a ratio of 80%wt carbon: 20%wt binder.

In the lithium-air battery of the present invention, the positive electrode may appropriately contain carbon. Examples of carbon include carbon blacks, such as Ketjen Black, acetylene black, channel black, furnace black, lamp black, and thermal black; graphite, such as natural graphite, e.g., scaly graphite, artificial graphite, and expanded graphite; activated carbon from charcoal and coal; carbon foam; carbon fibers obtained by carbonizing synthetic fibers and petroleum pitch-based materials; carbon nanofibers; molecular carbon such as fullerenes; and tubular carbon, such as carbon nanotubes. Modified carbons such as N-doped carbon may also be used.

Positive electrode materials can also be used in a lithium-air battery of the present invention based on materials other than carbon. For example, positive electrode materials based on metal foam, stable and conductive metal oxides, or steel, could be used.

In the present invention, where carbon is used, it is preferably a porous material in the form of a powder and preferably has a high specific surface area of 20 to 2000 m²/g, preferably 60 to 2000 m²/g and most preferably 60 to 1500 m²/g. For example, carbon may be used upon which a treatment is performed by a general method to increase porosity or surface area, followed by another treatment to increase the wettability. Examples of the commercial carbon products which can be used in the present invention include the KS series, SFG series, Super P series and Super S series available from TIMCAL Ltd., activated carbon products available from Norit, Black Pearl and AB-Vulcan 72 available from Cabot, and KB-ECP and KB-ECP600JD available from KB International. Other examples of commercially available carbon include the WAC powder series available from Xiamen All Carbon Corporation, PW15-type, J-type and S-type Activated Carbons available from Kureha, and Maxsorb MSP-15 available from Kansai Netsu Kagaku.

In general, an air cathode collector is connected to the air cathode, which collects current from the air cathode. The material for the air cathode collector and the shape of the same are not particularly limited. Examples of the material for the air cathode collector include stainless steel, aluminum, iron, nickel, titanium and carbon. Examples of the form of the air cathode collector include a foil form, a plate form, a mesh (grid) form and a fibrous form. Preferably, the air cathode collector has a porous structure such as a mesh form since the collector having a porous structure has excellent efficiency of oxygen supply to the air cathode.

In the lithium-air battery of the present invention, the nonaqueous ion-conducting (electrolyte) medium arranged between the negative electrode and the positive electrode may be a nonaqueous electrolytic solution containing one or more organic solvents and typically containing a salt. Non-limiting examples of the salt that can be used include known supporting electrolytes, such as LiPF₆, LiClO₄, LiAsF₆, LiBF₄, Li(CF₃SO₂)₂N, LiFSI i.e. Li(FSO₂)₂N, Li(CF₃SO₃), and LiN(C₂F₅SO₂)₂. These salts may be used separately or in combination. The concentration of the salt is preferably in the range of 0.1 to 5.0 M. In preferred embodiments, the lithium salt concentration in the electrolytic solution is more than 1.0 M, more than 1.5 M, and most preferably more than 2.0 M. In preferred embodiments, the salt concentration is less than 4.0 M, more than 3.2M, and most preferably less than 2.0 M. Furthermore, binders may be used with an ionic liquid-based electrolyte.

### EXAMPLES

### 1.1 Materials

### a. Binder synthesis

All chemical precursors, including poly(diallyldimethylammonium chloride) (PDADMA-Cl, high (400,000-500,000) and low (< 100,000) molecular weight, 20 wt.% in water, Aldrich) and the selected salts were used as received. Salts included Sodium Bis(fluorosulfonyl)imide (NaFSI, 99.7%, Solvionic), Lithium bis(trifluoro-methylsulfonyl)imide (LiTFSI, 99%, IoLiTec), Lithium bis(perfluoroethylsulfonyl)imide (LiBETI, 99%, IoLiTec), and Potassium nanofluoro-1-butanesulfonate (KC₄F₉SO₃, 95,0%, TCI).

### b. NMC-based electrodes

Materials for NMC-based electrodes were used as received and included: 1-methyl-2-pyrrolidone (NMP, suitable for HPLC, ≥99%, Sigma-Aldrich), Solution of 5 wt% of Poly(vinylidene fluoride) in NMP solvent (5 wt% PVDF in NMP, PVDF Mw >10 .10⁵ g/mol, KUREHA KF POLYMER), Carbon black (acetylene, Alfa Aesar) and NMC 523 (Custom Cells).

### c. Air electrodes

Gas diffusion layer sheets (GDL, Quintech, GER) were dried under vacuum at 120 °C for 24 hours. Ketjen Black 600 carbon (Akzonobel) was dried at 100 °C under vacuum for 24 hours. Reference binder LITHion^{™} dispersion (Ion Power Inc) was used from after adding activated 4 Å molecular sieves and allowed 5 days for drying effect. The water content, measured by Coulumetric Karl Fischer, decreased from 252.05 ppm to 218 ppm for the binder. Anhydrous 2-propanol (anhydrous IPA, MilliPore Sigma, < 0.005% H₂O, ≥ 99.9%) and anhydrous acetronitrile (anhydrous ACN, Aldrich, < 0.001% H₂O, ≥ 99.8%) were used as received.

### d. Lithium ion cells

All materials including electrode foil Graphite (active material content ≥95%, Custom Cells Itzehoe GmbH), NMC 523 cathode foil (active material content 90%, density 2.36 g.cm⁻³, Custom Cells Itzehoe GmbH), and the glass fiber sheets (Whatman^{®}, GF 6 grade, Schleicher&Schüll) were previously dried at 100°C under vacuum for 24 h before being introduced inside an argon-filled glove box.

The liquid electrolyte 1M Lithium hexafluorophosphate in Ethylene Carbonate : Ethyl methyl Carbonate (1:1 vol.%) (LiPF₆ in EC : EMC, 99,9%, Solvionic), was used and stored inside a glove box under argon atmosphere.

### e. Li-O₂ cells

Lithium metal (Φ 8 mm, 120 µm thick from Rockwood Lithium (US)) used as received. Glass fiber sheets were dried at 150 °C under vacuum for 24 hours before use (Φ 11.28 mm, Whatman^{®}, GF/A grade).

For the electrolytes, the acrylate crosslinkers (Aldrich) and tetraethylene glycol dimethyl ether (TEGDME, Aldrich, ≥99%)) were dried by adding activated 4 Å molecular sieves (Aldrich, 4-8 mesh) and allowed 5 days for drying effect (water content < 4.6 ppm, Karl Fisher). Lithium bis(trifluoromethanesulfonyl)imide (LiTFSI, TCI, > 98.0%) was dried under vacuum at 100°C for 24 hours.

### 1.2 Synthesis of PDADMA-X bearing different counter anions (FSI⁻, TFSI⁻, BETI⁻, and CFSO⁻)

Four polymeric ionic liquids, named as PDADMA-FSI, PDADMA-TFSI, PDADMA-BETI and PDADMA-C₄F₉SO₃ were synthesized by a salt metathesis reaction, as previously reported (Non-Patent Literature Reference 1 and 2). As shown in Scheme 1 below, an anion exchange reaction occurs between a Cl⁻ anion, coming from the commercially available PDADMA-Cl polymer aq. solution; and the negative ion of a commercial available monovalent salt (e.g. X+ = Na+, Li+, K+) containing the Y- of interest (e.g. Y- = FSI-, TFSI-, BETI- and C₄F₉SO₃⁻).

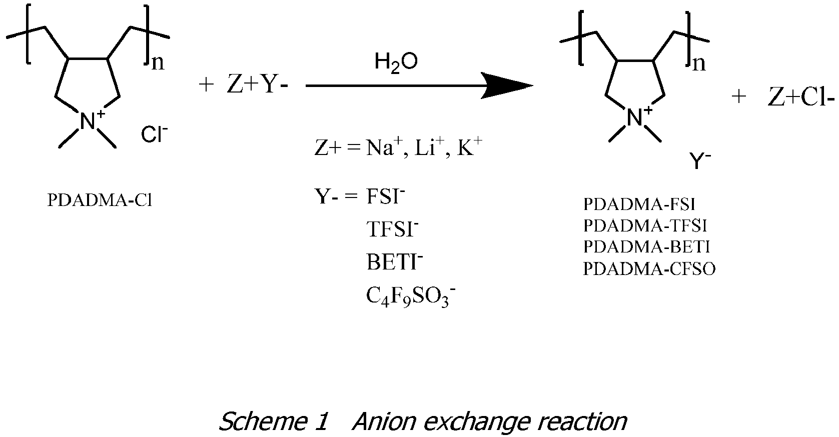

The methodology is the same for all the polymeric ionic liquids, with the exception of PDADMA-C₄F₉SO₃. First, a solution of 29.68 mmol of the selected salt (Z⁺Y⁻) is dissolved in 10 ml of distilled water at room temperature (125 ml at 60°C for Z⁺-C₄F₉SO₃) and added dropwise to an aqueous solution of 24.74 mmol of monomeric units of PDADMA-Cl dissolved in 100 ml of distilled water at RT (warmed up to 50 °C for ⁻C₄F₉SO₃ reaction). The resulting polymers precipitate instantaneously as white solid powders. The mixtures are stirred for 1 hour. Then, and after vacuum-filtration, the resulting polymer powders are washed in 300 mL of distilled water (stirring for 2 hours at RT) to remove any excess of unreacted salt and they are once again vacuum-filtrated. Finally, the polymer powders are vacuum-dried at 50 °C for at least 48 hours.

**Table 1: Yields (%) and masses (g) of the obtained polymers**

| **Polymeric ionic liquid** | **Mass (g)** | **Yield (%)** |
|---|---|---|
| PDADMA-FSI | 8.1420 | 96.9 |
| PDADMA-TFSI | 9.9200 | 95.3 |
| PDADMA-BETI | 12.3938 | 95.8 |
| PDADMA-C₄F₉SO₃ | 10.0012 | 93.5 |

### 1.3 Preparation of electrodes and battery assembly

### 1.3.1 Lithium ion cells

### NMC cathode fabrication

All the electrode slurries were composed by NMC523, acetylene black, and the binder in weight ratio of 90:5:5 in NMP solvent. The compounds were made by mixing with a planetary mixer (twice for 5 min at 2000 rpm) and a rotor stator mixer (twice for 120 seconds at 20 m.s⁻¹). Then the slurry was coated onto aluminium foil by film applicator at 200 µm of thickness and 12.5 mm.s⁻¹ of velocity. The coated foils were dried in vacuum oven at 90 °C for 12h.

### Assembly of Graphite| |NMC

The new NMC cathodes were cut with a pouching cutter 14 mm in diameter and pressed under 6 tons with a hydraulic press in order to obtain around 2.4 g.cm⁻³ density to be in the same properties than the commercial cathode used as a reference. Finally, the prepared electrodes were dried under vacuum at 90 °C for 24 h before introduced them inside glove box.

The cathodes were assembled into CR 2032-type coin cell in an Ar-filled glove box with levels of H₂O < 0.01 ppm and O₂ < 0.01 ppm. Glass fiber (16 mm in diameter) was used as separator, graphite electrode (15 mm in diameter) was used as anode and a volume of 120 µL of the liquid electrolyte 1M Lithium hexafluorophosphate in Ethylene Carbonate : Ethyl methyl Carbonate (1:1 vol.%) (LiPF₆ in EC : EMC, 99,9%, Solvionic) was added.

### 1.3.2 Li-O₂ cells

### Air electrodes fabrication

Positive electrodes were formed by a gas diffusion layer (GDL) coated with a slurry containing 80 %wt. of carbon and 20 %wt. of selected binder. The GDL sheets were punched into circular samples (Φ11.28 mm) and dried.

To make the slurry, 0.6 %wt. of carbon, 1.6 %wt. of selected binder and 97.8 %wt. of selected solvent was mixed together. Anhydrous 2-propanol was used as the solvent for the reference cathodes and acetonitrile for the new cathodes. The components were placed in a glass vial and mixed homogeneously using an Ultraturrax IKA T18, at speed 2 for at least 1 hour. The slurry was immediately used and 70 µL of the ink was deposited on each circular GDL. These were covered and allowed to dry at RT for 24 hours. The coated GDLs had an average carbon loading of 0.72 mg·cm⁻² for the reference cathode; 0.74 mg·cm⁻² for TFSI-based binder; 0.36 mg·cm⁻² for FSI-based binder; 0.80 mg·cm⁻² for BETI-based binders; and 0.89 mg·cm⁻² for CFSO-based binder cathodes.

All electrode preparation was done under argon, inside a glovebox with levels of H₂O < 0.01 ppm and O₂ < 0.01ppm.

### Assembly of Li-O₂ cells

Li-O₂ Swagelok cells were used and placed in specifically designed PEEK containers. The electrolytes were sandwiched between the negative and positive electrodes. In the case of liquid Li-O₂ cells, two glass-fiber sheets (Φ 11.28 mm) soaked with the liquid electrolyte mixture (200 µL) were used. The positive electrode was placed with the coated side facing the electrolyte surface and an aluminium mesh was used as current collector. Lithium metal (Φ 11.28 mm) was used in the negative electrode. This stack was then tighten in a PEEK Swagelok cell and transferred inside a sealed PEAK container. The argon gas inside the container was then purged and replaced by oxygen gas.

All cell assemblies were carried out under argon, inside a glovebox with levels of H₂O < 0.01 ppm and O₂ < 0.01ppm.

### 1.4 Electrochemical characterization

### 1.4.1 Lithium ion battery

### Galvanostatic discharge-charge

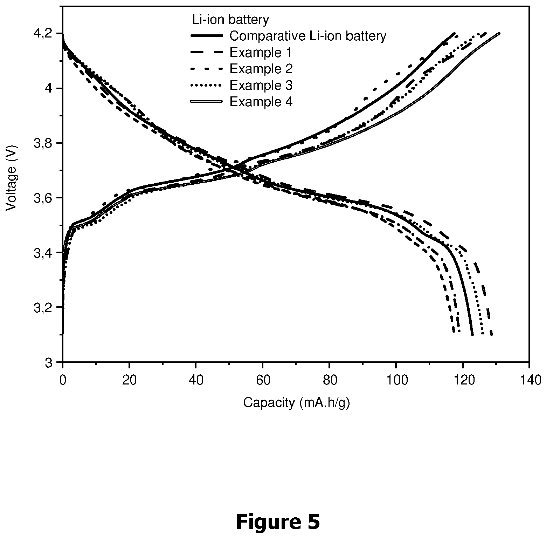

The lithium ion cells were tested through galvanostatic discharge-charge (GDC) cycling using a Multi Potentiostat MPG2-6 and VMP3-1 (BioLogic). The voltage range was (3.1-4.2) V and the temperature was set at 25 °C in a thermostatic chamber. Prior to galvanostatic testing, all cells were conditioned for 3 h at OCV at 25 °C. Then, the cells were activated at 0.3C for 2 cycles based on theoretical capacity and C-rate calculations with the mass of NMC active material. The experimental capacities were extracted from the second GDC and calculated by gram of electrode. Each test was repeated at least three times and the results shown are the average with the standard deviation (Figure 5).

### Resistance measurements

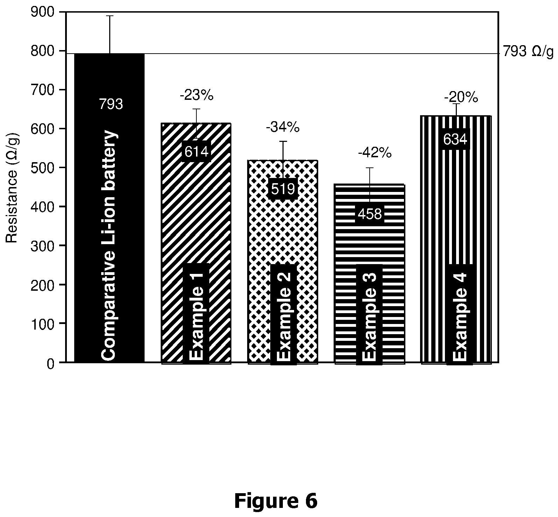

The resistance was evaluated following current pulses, also known as IV measurement and developed in Non-Patent Literature Reference 4. IV measurements were performed at 25°C at 56% of State-of-Charge (SoC56) applying different discharge current pulses (ΔI) which were 0.3C, 1C, 3C, and 5C with a duration of 10 seconds and the resulting voltage drop (ΔV) were measured. Between the discharge current pulses, the cells were charged applying 0.3C back to SoC56. ΔV is defined by linearization of the voltage curve 5 seconds after the start and the resistance is calculated using Ohm's law. Figure 6 shows the results and average of at least three cells.

### Long cycling test

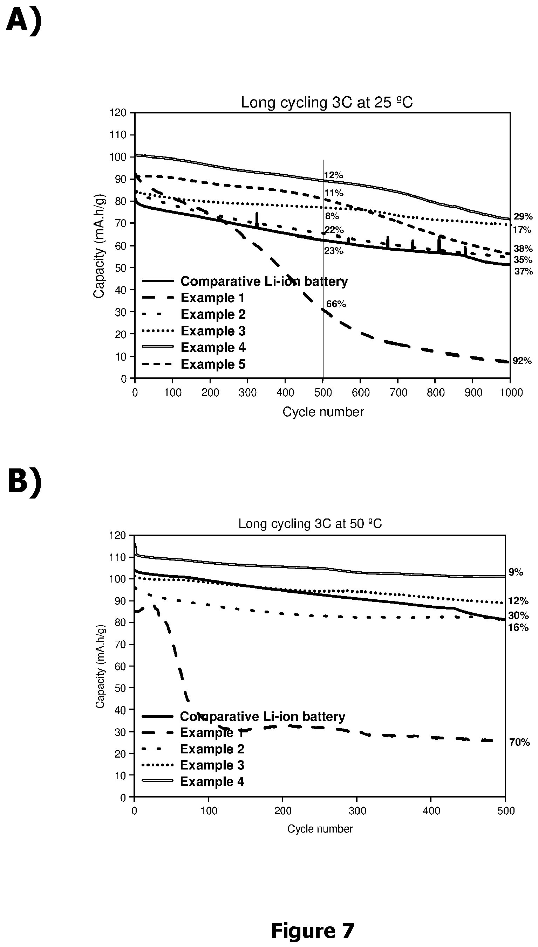

Long cycling tests were carried out applying 3C at 25 °C for 1000 galvanostatic discharge-charge cycles or applying 3C at 50 °C for 500 cycles, as shown in Figure 7.

### 1.4.2 Li-O₂ cells

### Galvanostatic discharge-charge (Li-O₂ cells)

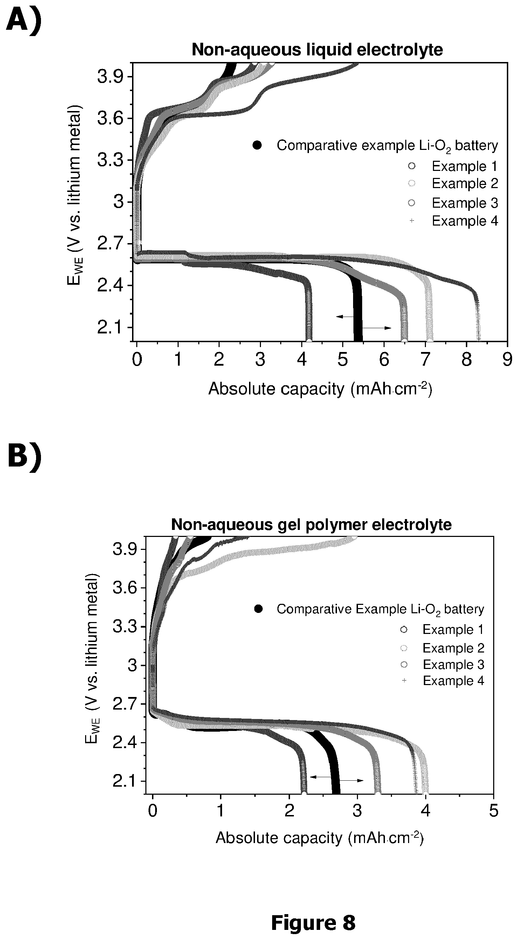

As shown in Figure 8, Li-O₂ Swagelok-cells were cycled with cut-off potentials of 2 V (discharge) and 4.6 V (charge) to determine their absolute discharge/charge capacities at ±0.1 mA·cm-2 and 25 °C. Tests were started after 3 h conditioning at OCV.

### Galvanostatic discharge-charge with limited capacity

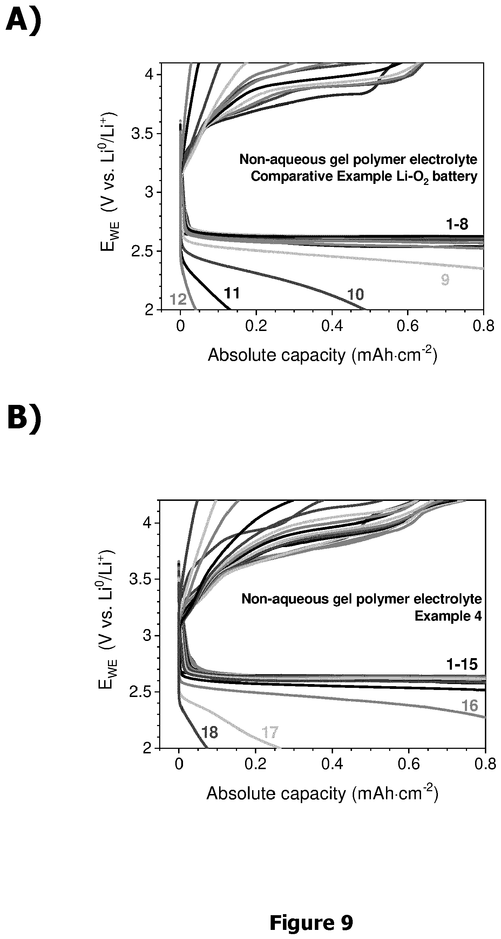

As shown in Figure 9, Li-O₂ Swagelok-cells were cycled at ±0.1 mA·cm-2 with limited capacity (0.8 mAh·cm-2) and cut-off potentials of 2 V (discharge) and 4.6 V (charge). Tests were started after 3 h conditioning at OCV and 25 °C.

### Rate test

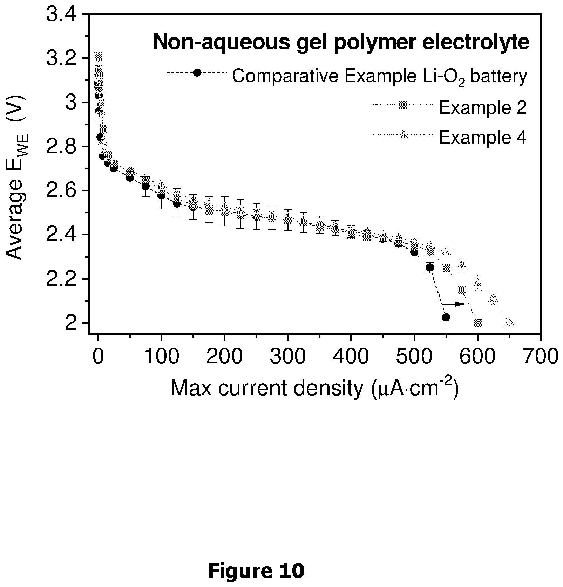

Li-O₂ Swagelok-cells were discharged following a dynamic approach, in which increasing negative currents were applied to the sample (Figure 10). Each current density was applied for 15 minutes and immediately increased and re-applied for another 15 minutes. This increasing current approach was done until the potential of the cell faded below 2 V.

### 2. RESULTS

### 2.1 Lithium ion battery

In Figures 5 to 7, the four PDADMA-F polymers are compared against PVDF (Reference) when used as binders in NMC-based cathodes for lithium ion cells.

### 2.2 Li-O₂ battery

In the Figures 8 to 10, the four PDADMA-F polymers are compared against lithiated-Nafion binder (AE-Ref) when used as binders in air electrodes (AE) for Li-O₂ cells. Here, the lithiated Nafion structure, which is lithium conductive, has a structure of the type:

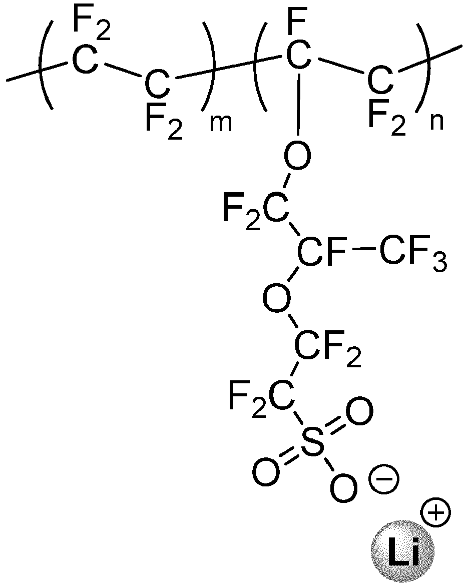

## Claims

1. Composition comprising:
(A) a mixed oxide of lithium, nickel, manganese and cobalt;
(B) a fluorinated anion salt of a polycationic polymer containing repeating units represented by one of the following formulae (1) or (2): 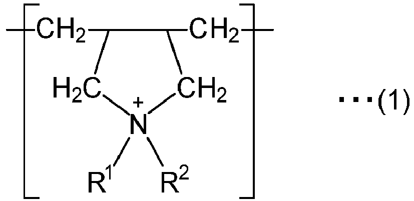 wherein, in the formula (1), N⁺ is a nitrogen atom constituting a quaternary ammonium cation, R¹ and R² being each independently a substituent containing a carbon atom bonded to the nitrogen atom, 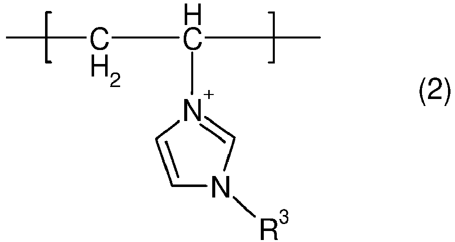 wherein, in the formula (2), R³ is a hydrogen atom or an alkyl group having 1 to 4 carbon atoms.

2. Composition according to claim 1, wherein each of R¹ and R² in formula (1) is an alkyl group, preferably a methyl group, an ethyl group, a propyl group or a butyl group.

3. Composition according to claim 1 or 2, wherein R¹ and R² in formula (1) are both a methyl group.

4. Composition according to claim 1 or 2, wherein R¹ in formula (1) is a methyl group and R² is a butyl group.

5. Composition according to claim 1, wherein R³ in formula (2) is an ethyl group.

6. Composition according to any of claims 1 to 5, wherein the fluorinated anion salt of the polycationic polymer comprises, as fluorinated counterion to the polycationic polymer, an imide anion of formula (3):
(F-(CF₂)ₙ-(SO₂)-)₂N⁻ (3)
wherein n = 0, 1 or 2.

7. Composition according to any of claims 1 to 6, wherein the fluorinated anion salt of the polycationic polymer comprises, as fluorinated counterion to the polycationic polymer, an imide anion having one of the following structures:

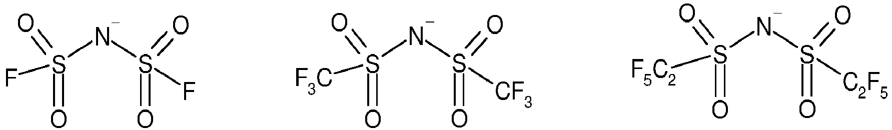

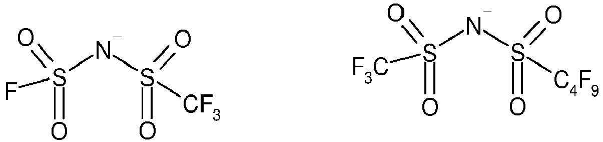

8. Composition according to any of claims 1 to 5, wherein the fluorinated anion salt of the polycationic polymer comprises, as fluorinated counterion to the polycationic polymer, a perfluoroalkyl sulfonate of formula (4):
F-(CF₂)ₙ-(SO₃)⁻ (4)
wherein n is an integer of 1 to 6.

9. Composition according to claim 7, wherein in the perfluoroalkyl sulfonate of formula (4), n is 4.

10. Composition according to any of claims 1 to 9, wherein mixed oxide of lithium, nickel, manganese and cobalt has a general formula (5):
LiNiₓMn_{y}CO_{z}O_{2±α} (5)
wherein x + y + z = 1.0, and α is at most 0.05.

11. Composition according to claim 10, wherein x = 0.5, y = 0.3 and z = 0.2.

12. Composition according to claim 10, wherein x = 0.33, y = 0.33 and z = 0.33, or x = 0.6, y = 0.2 and z = 0.2, or x = 0.8, y = 0.1 and z = 0.1.

13. A lithium-ion battery, comprising:
- a cathode including a positive electrode active material comprising the composition of any of claims 1 to 12;
- an anode including a negative electrode active material; and
- an electrolyte medium arranged between the anode and the cathode.

14. A lithium-air battery comprising:
- an anode containing a negative-electrode active material;
- a cathode using oxygen as a positive-electrode active material; and
- an electrolyte medium arranged between the anode and the cathode,
wherein the cathode contains a fluorinated anion salt of a polycationic polymer containing repeating units represented by one of the following formulae (1) or (2): 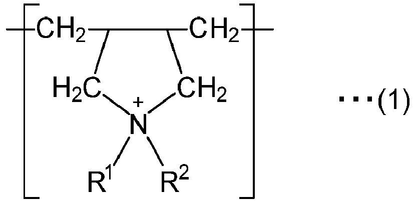 wherein, in the formula (1), N⁺ is a nitrogen atom constituting a quaternary ammonium cation, R¹ and R² being each independently a substituent containing a carbon atom bonded to the nitrogen atom, 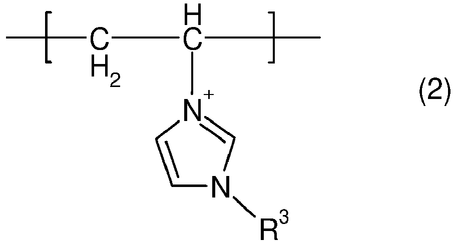 wherein, in the formula (2), R³ is a hydrogen atom or an alkyl group having 1 to 4 carbon atoms.

15. A lithium-air battery according to claim 14, wherein the fluorinated anion salt of the polycationic polymer comprises, as fluorinated counterion to the polycationic polymer, an imide anion of formula (3):
(F-(CF₂)ₙ-(SO₂)-)₂N⁻ (3)
wherein n = 0, 1 or 2, or a perfluoroalkyl sulfonate of formula (4):
F-(CF₂)ₙ-(SO₃)⁻ (4)
wherein n is an integer of 1 to 6.

16. A lithium-air battery according to claim 14 or 15, wherein the cathode contains carbon.

17. A lithium-air battery according to claim 16, wherein the carbon is one or more types selected from the group consisting of: carbon black; graphite; activated carbon; carbon (nano)fiber; carbon foam; molecular carbon; tubular carbon; and N-doped carbon.

18. A lithium-air battery according to claim 16 or 17, wherein the carbon shows one, two or three of the following characteristics:
- a specific surface area of between 20 and 2000 m²/g; and/or
- a pore diameter of 5 nm or more; and/or
- an average primary particle diameter of 8 to 350 nm.

19. A lithium-ion battery according to claim 13 or a lithium-air battery according to any of claims 14 to 18, wherein the liquid part of the electrolyte medium contains one or more aprotic organic solvents chosen from the group consisting of: cyclic carbonates, chain carbonates, cyclic esters, cyclic ethers, chain ethers, and nitriles.

20. A lithium-ion battery according to claim 13 or a lithium-air battery according to any of claims 14 to 18, wherein the electrolyte medium contains a lithium salt selected from the group consisting of LiClO₄, LiTFSI and LiPF₆.

## Amended claims

### Amended claims in accordance with Rule 137(2) EPC.

1. Composition comprising:
(A) a mixed oxide of lithium, nickel, manganese and cobalt;
(B) a fluorinated anion salt of a polycationic polymer containing repeating units represented by the following formula (1): 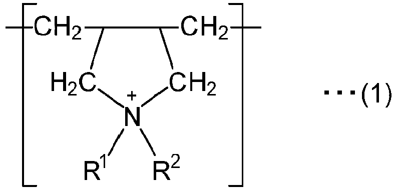
wherein, in the formula (1), N⁺ is a nitrogen atom constituting a quaternary ammonium cation, R¹ and R² being each independently a substituent containing a carbon atom bonded to the nitrogen atom, and
wherein the fluorinated anion salt of the polycationic polymer comprises, as fluorinated counterion to the polycationic polymer, an imide anion having one of the following structures: 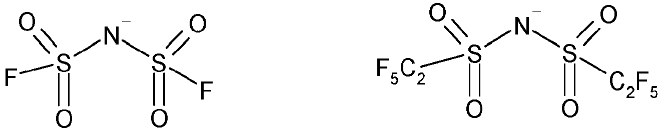 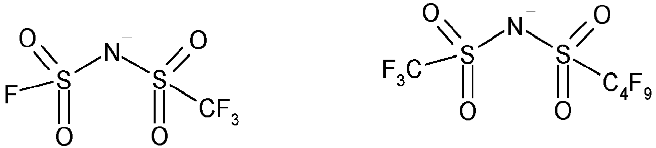 or a perfluoroalkyl sulfonate of formula (4):
F-(CF₂)ₙ-(SO₃)⁻ (4)
wherein n is 4.

2. Composition according to claim 1, wherein each of R¹ and R² in formula (1) is an alkyl group, preferably a methyl group, an ethyl group, a propyl group or a butyl group.

3. Composition according to claim 1 or 2, wherein R¹ and R² in formula (1) are both a methyl group.

4. Composition according to claim 1 or 2, wherein R¹ in formula (1) is a methyl group and R² is a butyl group.

5. Composition according to any of claims 1 to 4, wherein mixed oxide of lithium, nickel, manganese and cobalt has a general formula (5):
LiNiₓMn_{y}CO_{z}O_{2±α} (5)
wherein x + y + z = 1.0, and α is at most 0.05.

6. Composition according to claim 5, wherein x = 0.5, γ = 0.3 and z = 0.2.

7. Composition according to claim 5, wherein x = 0.33, y = 0.33 and z = 0.33, or x = 0.6, y = 0.2 and z = 0.2, or x = 0.8, y = 0.1 and z = 0.1.

8. A lithium-ion battery, comprising:
- a cathode including a positive electrode active material comprising the composition of any of claims 1 to 7;
- an anode including a negative electrode active material; and
- an electrolyte medium arranged between the anode and the cathode.

9. A lithium-ion battery according to claim 8, wherein the liquid part of the electrolyte medium contains one or more aprotic organic solvents chosen from the group consisting of: cyclic carbonates, chain carbonates, cyclic esters, cyclic ethers, chain ethers, and nitriles.

10. A lithium-ion battery according to claim 8, wherein the electrolyte medium contains a lithium salt selected from the group consisting of LiClO₄, LiTFSI and LiPF₆.
